# EUROPÄISCHE PATENTSCHRIFT

(11) **EP 1 816 033 B1**
(45) Veröffentlichungstag und Bekanntmachung des Hinweises auf die Patenterteilung: **11.09.2013**
(21) Anmeldenummer: 06021805.4
(22) Anmeldetag: 18.10.2006
(51) Int. Cl.: B60R 7/02

(54) **Verstaunetz**
Storage net
Filet de rangement

(30) Priorität: 01.02.2006 DE 102006004918
(43) Veröffentlichungstag der Anmeldung: 08.08.2007
(73) Patentinhaber: BOS GmbH & Co. KG, 73760 Ostfildern (DE)
(72) Erfinder: Bohlke, Helmut, 42369 Wuppertal (DE); Gass, Dirk, 74389 Cleebronn (DE); Benesch, Bettina, 99731 Thalebra (DE)
(74) Vertreter: Rüger, Barthelt & Abel

(56) Entgegenhaltungen:
- WO-A1-93/22161
- DE-A1- 10 301 639
- DE-A1- 19 814 967
- DE-C1- 19 732 403
- DE-C1- 19 732 404
- US-A- 1 616 591
- US-A1- 2002 043 543

## Beschreibung

Bei den aktuellen Karosserieformen sind die Lade- oder Kofferräume am Boden und an der Seite weitgehend glatt und enthalten nicht mehr wie früher üblich Nischen und Vertiefungen. Entsprechend schwierig ist es, Kleinteile, die den Kofferraum nicht weitgehend ausfüllen, im Kofferraum unterzubringen. Mangels Halteeinrichtungen rutschen sie beim Anfahren, Bremsen und scharfen Kurven fahren im Kofferraum beliebig herum und stoßen überall an.

Um dem entgegen zu wirken, werden neuerdings im Kofferraumboden Verzurrschienen oder Verzurrösen integriert, die es gestatten, dort Haltenetze einzuhängen. So ist es beispielsweise bekannt, ein flächiges Netz zu verwenden, das an seinen vier Ecken am Kofferraumboden verankert ist und unter dem einigermaßen rutschsicher Gegenstände zu halten sind. Das Netz besteht aus einem elastischen Material und ist in der Lage, nicht all zu schwere Gegenstände bei den üblicherweise auftretenden Beschleunigungskräften festzuhalten.

Das bekannte Netz setzt vier Verankerungspunkte voraus, wobei diejenigen Verankerungspunkte, die in der Nähe der Rücksitzlehne liegen, für den Benutzer, der neben der Heckstoßstange steht, schwer zu erreichen sind.

Das bekannte Netz ist außerdem fummelig in der Handhabung, wenn es nicht eingehängt ist. Das biegeschlaffe flächige Gebilde verheddert sich leicht und die Haken an den Ecken neigen dazu sich im netz zu verhaken.

Aus US 2002/0043534 A1 ist ein Verstaunetz bekannt, das einen Halbschlauch aus einem Flächengebilde aufweist, der zwei Enden und zwei zwischen den Enden sich erstreckende Längskanten aufweist. Aus dem Halbschlauch wird eine rechteckige Tasche gebildet, wobei die beiden Längskanten dicht nebeneinander angeordnet sind. Zwischen den Längskanten kann ein Schlitz verbleiben. An den beiden Enden ist der Halbschlauch mit jeweils einem Endstück geschlossen. Die Endstücke fixieren die halbschlauchartige Struktur und sind mit Verankerungsmitteln in Form von Laschen versehen, die an zwei sich in Längsrichtung gegenüberliegenden Ecken angeordnet sind.

DE 103 01 639 A1 betrifft eine Anordnung zur Sicherung eines Flüssigkeitsbehälters, zum Beispiel eines Feuerlöschers, im Fahrzeug. Die Anordnung weist einen Schlauch auf, dessen Enden mit Ösen und Karabinerhaken versehen sind, um den Schlauch mit dem darin angeordneten Behälter im Fahrzeug zu befestigen.

Ausgehend hiervon ist es Aufgabe der Erfindung ein Verstaunetz zu schaffen das leichter handhabbar ist.

Diese Aufgabe wird erfindungsgemäß mit einem Verstaunetz mit den Merkmalen des Anspruches 1 gelöst.

Die neue Vorrichtung zum Verstauen weist ein Flächengebilde auf, das zu einem Halbschlauch geformt ist. Der Halbschlauch weist zwei Enden auf, zwischen denen sich die Längskanten des Flächengebildes erstrecken. An den Enden des Halbschlauches sind Endstücke befestigt, die die Halbschlauchgestalt des Flächengebildes fixieren und von denen jedes mit einem Verankerungsmittel in Gestalt eines Hakens oder einer Öse versehen ist.

Das erfindungsgemäße Verstaunetz kommt auf diese Weise mit lediglich zwei Verankerungspunkten aus und kann somit unmittelbar hinter der Ladekante am Kofferraumboden eingehängt werden. Aufgrund der nach unten offenen halbschlauchförmigen Gestalt kann in dem nach unten offenen Netz ohne weiteres ein Gegenstand untergebracht und fixiert werden. Da die Längskanten unterhalb des zu verstauenden Gebildes liegen, haben sie wegen der Straffung zwischen den Verzurrpunkten die Tendenz, den Gegenstand zu umschließen.

Angenommen, mit dem erfindungsgemäßen Verstaunetz sollte ein Gegenstand im Koffer- oder Laderaum festgelegt werden, der die Gestalt eines Fußballs hat, so zieht sich das Netz bei der ordnungsgemäßen Orientierung automatisch um den Gegenstand zusammen. Wären die Schlitzränder oben, würde die Straffung dafür sorgen, dass die Stützränder am Gegenstand abrutschen und den Gegenstand freigeben.

Aufgrund der halbschlauchförmigen Gestalt lässt sich das erfindungsgemäße Verstaunetz über nahezu beliebige Gegenstände ziehen, die in dem Netz sicher festgehalten werden. Ein Gegenstand, der aufgrund eines Bremsvorgangs gegen die Netzflanke drängt, gleitet dabei über den Netzrand des Halbschlauches hinweg und weitet lediglich das Flächengebilde in der betreffenden Richtung aus, ohne Gefahr zu laufen aus dem Schlitz des Halbschlauches freikommen zu können.

Besonders anpassungsfähig wird das Verstaunetz dann, wenn das Flächengebilde von einem Netz gebildet ist, das zumindest abschnittsweise dehnbar ist. Anstelle eines Netzes kann das Flächengebilde auch aus einer dehnbaren elastischen Folie bestehen, beispielsweise einer geeigneten Elastomerfolie.

Weil die erfindungsgemäße Vorrichtung lediglich zwei Enden hat, ist sie leichter zu verstauen und die Einhängehaken können sich nicht in der Netzstruktur verheddern, wie dies bei den bekannten viereckigen Flachnetzen gerne geschieht, die eine Vierpunkthalterung aufweisen.

Das Netz kann aus umsponnenen elastomeren oder undehnbaren Fäden bestehen. Dehnbare Fäden zur Erzeugung der Netzstruktur gewährleisten immer einen straffen Verlauf zwischen den Einhängepunkten.

Bei der erfindungsgemäßen Vorrichtung können sich die Ränder des Halbschlauches einander überlappen, was eine sehr sichere Fixierung des zu verstauenden Ladeguts ergibt oder sie können auf Stoß nebeneinander liegen, was die Handhabung vereinfacht.

Wenn sich die Schlitzränder überlappen, ist es unter Umständen von Vorteil, eine bestimmte Orientierung im Kraftfahrzeug zu erzwingen. Dies kann erreicht werden, indem die Verankerungsmittel an beiden Ende unterschiedlich ausgebildet werden, so dass ein Vertauschen unmöglich wird.

Bei überlappenden Schlitzrändern ist es von Vorteil, wenn der zur Frontpartie des Fahrzeuges zeigende Schlitzrand unmittelbar auf dem Kofferraumboden liegt, während der in Richtung Heck ausgerichtete Schlitzrand in dem Halbschlauch liegt.

Zum Straffen der Längskante kann, wie bereits erwähnt, jeweils ein elastomerer Faden oder eine elastomere Schnur verwendet werden, und zwar unabhängig davon, ob das Netz selbst aus dehnbarem oder undehnbarem oder begrenzt dehnbarem Material besteht.

Die Verwendung eines umsponnenen oder umflochtenen Fadens hat den Vorteil, dass sehr leicht die Kreuzungspunkte des Netzes festgelegt werden können, ohne dass sich dort die Fäden tatsächlich kreuzen, und außerdem kann die undehnbare Hülle wirksam eine Dehnungsbegrenzung des umhüllten Fadens erzwingen.

Eine sehr einfache Herstellungsform sieht das Vernähen der Endstücke mit dem zum Halbschlauch geformten Flächengebilde vor. Jedes Endstück besteht dabei aus zwei plattenförmigen Teilen, zwischen die sandwichartig das Flächengebilde eingelegt ist. Die plattenförmigen Teile haben eine dreieck- oder trapezartige Gestalt und laufen in Richtung auf das Verankerungmittel spitz zu. Für die plattenförmigen Teile kommt biegsames Material, beispielsweise entsprechend festes Leder, in Frage.

Die Verankerungsmittel können Haken oder Ösen sein, wobei Ösen den Vorteil der geringeren Verletzungsgefahr zeigen, wenn beim Ein- oder Aushängen Handhabungsfehler auftreten, die den Haken wegschnalzen lassen.

Im Übrigen sind Weiterbildungen der Erfindung Gegenstad von Unteransprüchen. Bei der Durchsicht der nachfolgenden Figurenbeschreibung wird klar, dass hier lediglich ein prinzipielles Ausführungsbeispiel gezeigt ist, das in vielfältiger Weise an die jeweiligen Anforderungen angepasst werden kann, ohne das Grundprinzip der Erfindung zu verlassen.

In der Zeichnung ist ein Ausführungsbeispiel des Gegenstandes der Erfindung dargestellt. Es zeigen:
- Fig. 1: einen Koffer- oder Laderaum eines Pkws, in einer aufgebrochenen perspektivischen Darstellung;
- Fig. 2: das Verzurrnetz nach Fig. 1 im entnommenen Zustand mit Blick auf die Unterseite, in einer perspektivischen Darstellung;
- Fig. 3: ein Ende des Verzurrnetzes nach Fig. 2, in einer perspektivischen Explosionsdarstellung und im Ausschnitt;
- Fig. 4: den Aufbau der Fäden für das Verzurrnetz und
- Fig. 5: das Ende eines weiteren Ausführungsbeispiels des erfindungsgemäßen Verzurrnetzes unter Verwendung einer elastomeren Folie, in einer Darstellung ähnlich Fig. 3

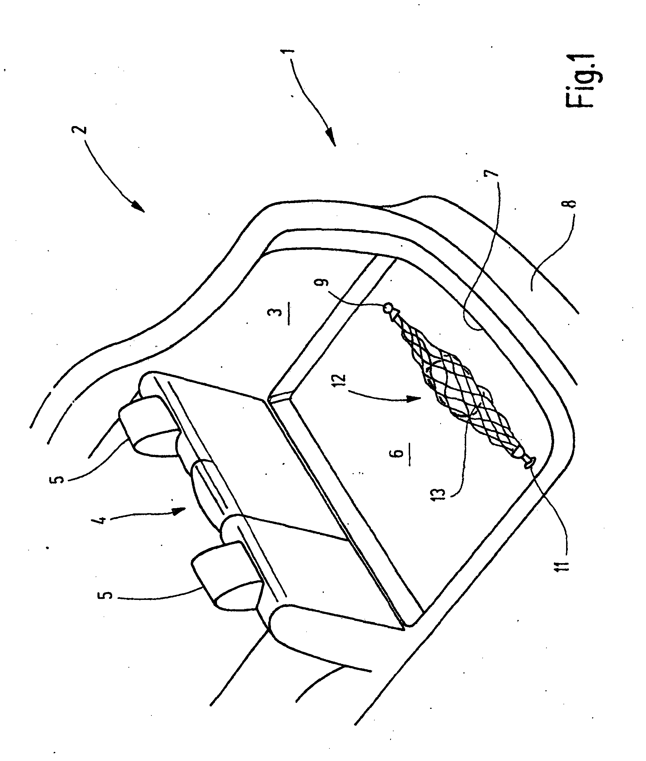

Fig. 1 zeigt einen Blick in einen Kofferraum 1 eines PKW 2, bei dem es sich um einen Kombi-Pkw, oder wie gezeigt eine Stufenhecklimousine, handeln kann. Der Pkw 2 ist aufgebrochen dargestellt und es ist eine Seitenwand 3 sowie eine geteilte Rücksitzlehne 4 zu erkennen. Auf der Rücksitzlehen befinden sich zwei Kopfstützen 5.

Spiegelbildlich zu der Kofferraumseitenwand 3 ist eine weitere Seitenwand zu denken, die wegen der abgebrochenen Darstellung nicht zu erkennen ist. Zwischen den beiden Seitenwänden 3 verläuft ein Kofferraumboden 6, der von der Unterkante der Rücksitzlehne 4 bis zu einer Ladebordkante 7 reicht. Unterhalb derer ist ein Stoßfänger 8 zu erkennen.

In kurzem Abstand neben der rechten Seitenwand 3 befindet sich auf dem Kofferraumboden 6 ein versenkbarer Verzurrkaken 9 in kurzem Abstand neben der Ladebordkante 7. Im selben Abstand vor der Ladebordkante 7 ist im Abstand zu der weg gebrochenen Seitenwand 3 in dem Kofferraumboden 6 eine Verzurröse 11 vorhanden. Zwischen dem Verzurrhaken 9 und der Verzurröse 11 ist ein Verstaunetz 12 gespannt, das dazu dient, einen zwischen den Netzmaschen erkennbaren Gegenstand 13 auf dem Laderaumboden 6 festzulegen.

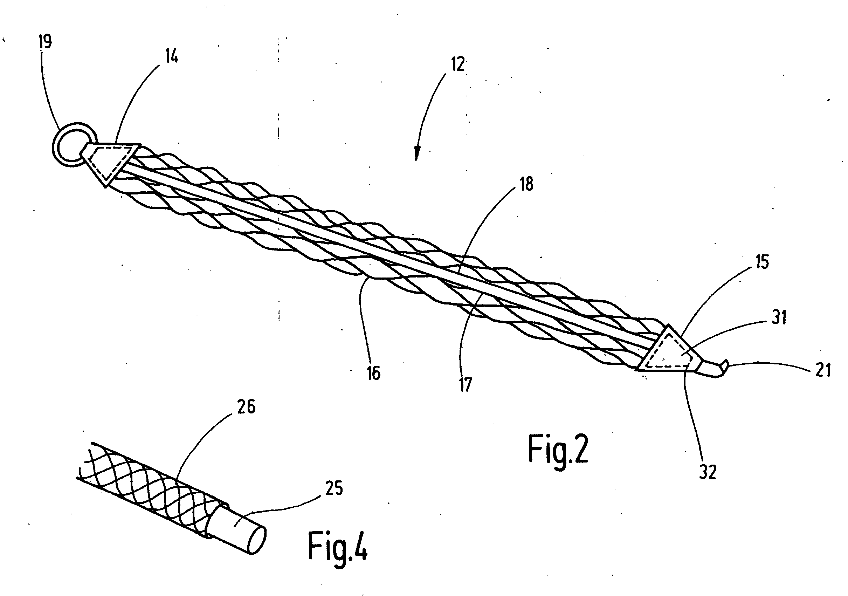

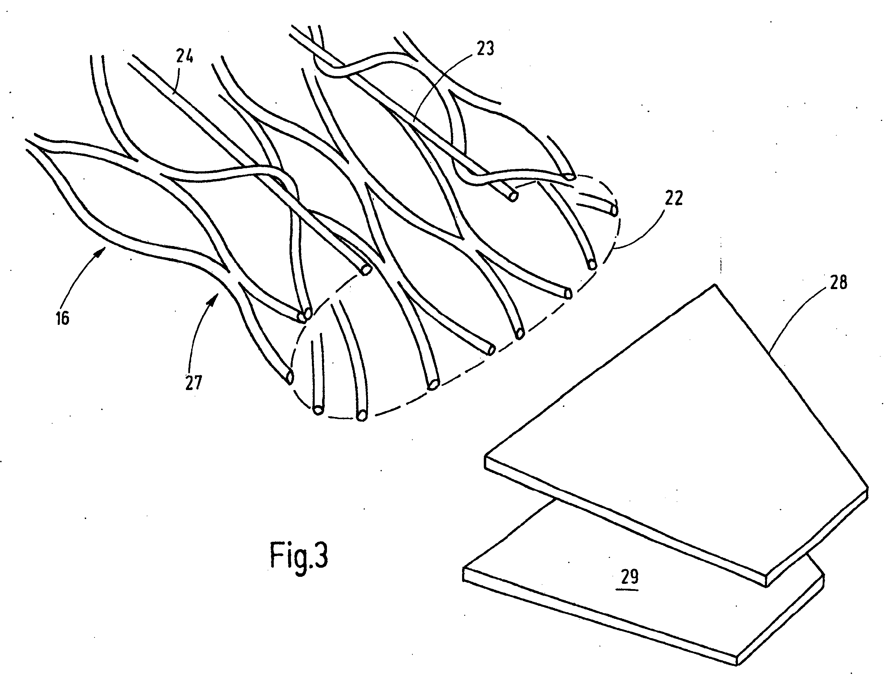

Der Aufbau des Verzurrnetzes 12 ergibt sich aus den Figuren 2 und 3.

Das Verzurrnetz 12 weist zwei etwa trapezförmige Endstücke 14 und 15 auf, zwischen denen ein netzförmiges textiles Flächengebilde 16 gespannt ist. Das textile Flächengebilde 16 ist zwischen den beiden Endstücken 14 und 15 zu einem Halbschlauch gelegt, dessen beiden Längskanten mit 17 und 18 bezeichnet sind. Die beiden Längskanten 17 und 18 sind in Fig. 2 mit Abstand voneinander veranschaulicht um sie in der Figur erkennen zu können. Bei der praktischen Ausführung liegen sie zweckmäßigerweise unmittelbar nebeneinander, womit sie in Fig. 2 nicht unterscheidbar wären.

Das Endstück 14 ist mit einer Verzurröse 19 versehen, während das Endstück 15 einen Verzurrhaken 21 trägt. Der Verzurrhaken 21 ist dazu vorgesehen, in die Verzurröse 11 im Ladeboden 6 eingehängt zu werden, während die Verzurröse 19 in dem Verzurrhaken 9 verankert wird.

Abweichend von der Darstellung ist es auch möglich, beide Endstücke mit Verzurrhaken oder Verzurrösen 19 auszurüsten, womit dann in dem Laderaumboden 6 entweder nur Verzurrhaken oder nur Verzurrösen vorhanden sind.

Die gleichzeitige Verwendung einer Verzurröse und eines Verzurrhakens definiert die Einbaulage des Verzurrnetzes 12 in dem Lade- oder Kofferraum 1.

Wie Fig. 3 erkennen lässt, handelt es sich bei dem textilen Flächengebilde 16 um ein im Grunde genommen rechteckig zugeschnittenes Teil mit Netzstruktur, dessen ungeschnittene Kanten parallel zu den beiden Längskanten 17, 18 liegen, und dessen Schnittkanten, ,angedeutet durch eine gestrichelte Linie 22, rechtwinklig zu den Längskanten 16, 17 liegen. Eine zweite Schnittkante,liegt am weg gebrochenen Ende der Darstellung. Die Netzstruktur ist stark vergröbert gezeichnet, um das Wesentliche erkennen zu können. Bei der tatsächlichen Ausführungsform würden die einzelnen Fäden des Netzes zu dicht beieinander liegen und die Struktur unerkennbar machen.

Fig. 3 zeigt in einer vergrößerten Darstellung und in Form einer Explosionszeichnung eines der beiden Enden des Verstaunetzes 12, um dort den Aufbau zu veranschaulichen. Das andere Ende ist spiegelbildlich zu denken, wobei die gegebene Erläuterung auch sinngemäß für das andere Ende gilt.

Das textile Flächengebilde 16 ist mit seinen natürlichen oder geschlossenen Netzkanten auf zwei Gummischnüre 23 und 24 aufgefädelt.

Die Gummischnüre 23 und 24 setzen sich wie Fig. 4 im Ausschnitt zeigt, aus einem elastomeren Faden 25 und einer Hülle 26 zusammen, die aus einem undehnbaren Faden hergestellt ist. Es handelt sich somit um eine Gummischnur mit einem elastomeren Kern, der umsponnen oder umflochten ist. Die äußere Hülle 26 sorgt für einen mechanischen Schutz des elastomeren Fadens 25 und erzeugt außerdem aufgrund ihrer Undehnbarkeit eine Dehnungsbegrenzung für den elastomeren Faden 25. Mit Hilfe der Hülle 26 wird der elastomere Faden 25 hinreichend scheuerfest.

Der äußere Faden kann ein Polyesterfaden oder ein Polyacrylfaden sein, der hinreichend stabil ist.

Auch das textile Flächengebilde 16 selbst kann in ähnlicher Weise aufgebaut sein, indem die Fäden, die das textile Flächengebilde 16 bilden, Elastomerfäden oder Monofilamente mit entsprechenden Durchmesser sind, die von einer Umhüllung umgeben sind. Mit Hilfe der Umhüllung 26 können außerdem zur Erzeugung der Netzstruktur an benachbarten Punkten, wie bei 27, im regulären Abstand die Fäden des Netzes miteinander verbunden sein, um die Maschenstruktur des Netzes zu erzeugen. An diesen Stellen umfasst beispielsweise die Hülle 26 zwei benachbarte Fäden.

Bei der Herstellung wird nach dem Zuschneiden des textilen Flächengebildes dieses wie gezeigt zu einem Halbschlauch gelegt. Sodann wird der erzeugte Halbschlauch zwischen zwei Platten 28, 29 eingelegt. Diese beiden Platten 28, 29 sind beispielsweise entsprechende trapezförmige Lederzuschnitte. Nach dem Einlegen dieses Halbschlauches werden die beiden Platten 28, 29 randseitig miteinander vernäht, wobei durch die Naht gleichzeitig das zum Halbschlauch geformte textile Flächengebilde 16 zwischen den beiden Platten 28, 29 fixiert wird. Gleichzeitig wird die Halbschlauchstruktur stabilisiert. Die beiden Platten 28, 29 bilden gemeinsam die bereits erwähnten Endstücke 14, 15.

Je nach Ausbildung der Platten kann zwischen diese die Öse 19 eingelegt werden, oder es kann der Haken 21 eingesteckt werden, der mit Hilfe zweier Nieten 31, 32 zwischen den Platten 28, 29 befestigt wird.

Die Handhabung des beschriebenen Verzurrnetzes 12 geschieht in der Weise, dass es mit der offenen Seite nach unten in dem Lade- oder Kofferraum 1 eingehakt wird. Dadurch umschließt es, wie Fig. 1 erkennen lässt, den zu verstauenden Gegenstand 13 auf der Oberseite. Die unmittelbar auf dem Laderaumboden 6 liegenden Längskanten 17, 18, die aufgrund der beiden Gummifäden 23, 24 elastisch ausgebildet sind und bestrebt sind, den Schlitz oder Spalt zwischen sich zu schließen, werden durch die Anordnung gestrafft gehalten. Der verstaute Gegenstand 13 hat bei dieser Anordnung nicht das Bestreben, die beiden Längskanten 17, 18 voneinander weg zu drücken, um zwischen ihnen frei zu kommen.

Je nach Ausgestaltung des textilen Flächengebildes 16 kann dieses entweder in sich elastisch sein, weil es einen Fadenaufbau gemäß Fig. 4 hat, oder es kann als so genannte Kettenwirkware hergestellt sein. Im letzteren Falle besteht es aus Monofilamenten, die undehnbar sind. Das textile Flächengebilde 16 wäre in diesem Falle vollständig biegeschlaff und im Grunde genommen undehnbar. Im Sinne einer guten straffen Anlage an dem zu verstauenden Gegenstand 13 ist es jedoch von Vorteil, wenn das textile Flächengebilde 16 in sich ebenfalls elastisch ist, das heißt die Fäden haben einen Aufbau entsprechend Fig. 4. Die andere Möglichkeit beseht in der Verwendung von Fäden mit oder aus Elastan, die zu dem Netz gewirkt sind.

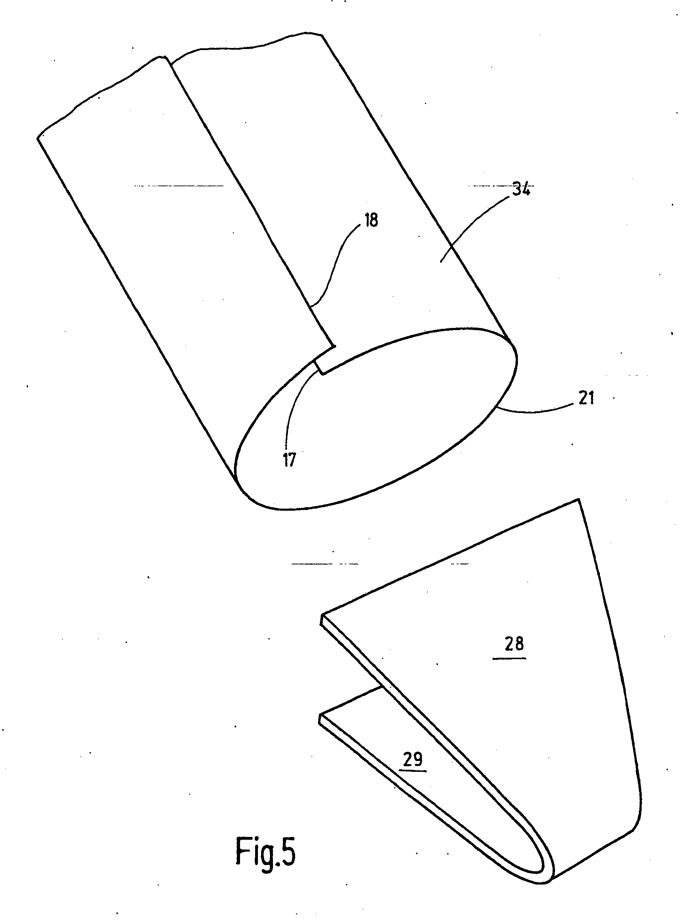

Anstatt zwischen den beiden Endstücken ein Netz zu verwenden, wie dies in den Figuren gezeigt ist, kann auch ein Flächengebilde verwendet werden, das aus einer elastomeren Folie 34 besteht, die ebenfalls wie Fig. 5 zeigt, zu einem Halbschlauch gelegt ist. Kanten dieser Folie bilden die Längskanten 17, 18, während andere Kanten den Schnittkanten 22 entsprechen.

Bei der Ausführungsform nach Fig. 5 sind außerdem die beiden Platten 28, 29 an ihrer Schmalseite, wie erkennbar, einstückig verbunden. Eine solche Ausführungsform ist bei der Verwendung einer Ringöse 19 von Vorteil.

Die Verbindung zwischen den Platten und der elastomeren Folie 34 geschieht ebenfalls durch Nähen oder Kleben oder Schweißen.

Fig. 5 lässt außerdem erkennen, dass das Flächengebilde auch so zu einem Halbschlauch gelegt werden kann, dass die beiden Längskanten 17, 18 einander überlappen.

Im Übrigen ist die Handhabung wie zuvor beschrieben.

Ein Verzurrnetz setzt sich aus einem Flächengebilde zusammen, das zu einem Halbschlauch gelegt ist. Der Halbschlauch ist endseitig mit Verzurrmitteln versehen, die gleichzeitig die Halbschlauchkonfiguration stabilisieren. Das Verzurrnetz wird mit der offenen Seite nach unten dem Ladeboden zugekehrt verwendet.

## Patentansprüche

1. Vorrichtung zum Festlegen von Gegenständen (13) in einem Lade- oder Kofferraum (1) eines Pkw,
mit einem Halbschlauch aus einem Flächengebilde (16), der zwei Enden und zwei zwischen den Enden sich erstreckende Längskanten (17,18) aufweist,
mit zwei Endstücken (14,15), von denen je eines an einem Ende des Halbschlauchs befestigt ist, die die halbschlauchartige Struktur fixieren und von denen jedes mit Verankerungsmitteln (19,21) versehen ist,
**dadurch gekennzeichnet, dass** jedes Endstück (14,15) zwei plattenförmigen Teile (28,29) aufweist, zwischen denen der Halbschlauch eingefügt ist und wobei die plattenförmigen Teile (28,29) eine dreieckige oder trapezförmige Gestalt aufweisen.

2. Vorrichtung nach Anspruch 1, **dadurch gekennzeichnet, dass** das Flächengebilde (16) zumindest abschnittsweise dehnbar ist.

3. Vorrichtung nach Anspruch 1, **dadurch gekennzeichnet, dass** das Flächengebilde (16) von einem Netz gebildet ist.

4. Vorrichtung nach Anspruch 3, **dadurch gekennzeichnet, dass** das Netz (16) aus umsponnenen elastomeren oder undehnbaren Fäden (25) besteht,

5. Vorrichtung nach Anspruch 3, **dadurch gekennzeichnet, dass** das Netz (16) aus dehnbarem oder undehnbarem Material besteht.

6. Vorrichtung nach Anspruch 1, **dadurch gekennzeichnet, dass** das Flächengebilde (16) aus einer dehnbaren elastomeren Folie besteht.

7. Vorrichtung nach Anspruch 1, **dadurch gekennzeichnet, dass** die Längskanten (17,18) einander überlappen oder auf Stoß liegen.

8. Vorrichtung nach Anspruch 1, **dadurch gekennzeichnet, dass** die Längskanten (17,18) eine größere Rückzugskraft aufweisen als der Halbschlauch sonst.

9. Vorrichtung nach Anspruch 1, **dadurch gekennzeichnet, dass** jede Längskante (17,18) ein elastomeres linienförmiges Glied (23,24) aufweist.

10. Vorrichtung nach Anspruch 1, **dadurch gekennzeichnet, dass** die Endstücke (14,15) mit dem Halbschlauch vernäht sind.

11. Vorrichtung nach Anspruch 1, **dadurch gekennzeichnet, dass** die plattenförmigen (28,29) Teile miteinander vernäht sind.

12. Vorrichtung nach Anspruch 1, **dadurch gekennzeichnet, dass** die plattenförmigen Teile (28,29) aus einem biegsamen Material bestehen.

13. Vorrichtung nach Anspruch 1, **dadurch gekennzeichnet, dass** die Verankerungsmittel (19) Ösen sind.

14. Vorrichtung nach Anspruch 1, **dadurch gekennzeichnet, dass** die Verankerungsmittel (21) Haken sind.

## Claims

1. Device for securing objects (13) in a cargo or luggage compartment (1) of an automobile,
with a semi-tubular structure made of a fabric (16), which has two ends and two longitudinal edges (17, 18) extending between the ends,
with two end pieces (14, 15), one of which is fastened to a respective end of the semitubular structure, which end pieces securing the semi-tubular structure and each one being provided with anchoring elements (19, 21),
**characterised in that** each end piece (14, 15) has two plate-shaped parts (28, 29), between which the semi-tubular structure is inserted, and wherein the plate-shaped parts (28, 29) have a triangular or trapezoidal shape.

2. Device according to claim 1, **characterised in that** the fabric (16) is stretchable at least in sections.

3. Device according to claim 1, **characterised in that** the fabric (16) is in the form of a net.

4. Device according to claim 3, **characterised in that** the net (16) is composed of covered elastomeric or non-stretchable threads (25).

5. Device according to claim 3, **characterised in that** the net (16) is made from stretchable or non-stretchable material.

6. Device according to claim 1, **characterised in that** the fabric (16) is made of a stretchable elastomeric film.

7. Device according to claim 1, **characterised in that** the longitudinal edges (17, 18) overlap or abut one another.

8. Device according to claim 1, **characterised in that** the longitudinal edges (17, 18) have a greater retraction strength than the semi-tubular structure itself.

9. Device according to claim 1, **characterised in that** each longitudinal edge (17, 18) has an elastomeric linear member (23, 24).

10. Device according to claim 1, **characterised in that** the end pieces (14, 15) are sewn to the semi-tubular structure.

11. Device according to claim 1, **characterised in that** the plate-shaped parts (28, 29) are sewn together.

12. Device according to claim 1, **characterised in that** the plate-shaped parts (28, 29) are made from a flexible material.

13. Device according to claim 1, **characterised in that** the anchoring elements (19) are eyelets.

14. Device according to claim 1, **characterised in that** the anchoring elements (21) are hooks.

## Revendications

1. Dispositif pour immobiliser des objets (13) dans un espace de chargement ou un coffre (1) d'une voiture,
comprenant un demi-tube composé d'une structure plane (16) qui présente deux extrémités et deux bords longitudinaux (17, 18) qui s'étendent entre les extrémités,
comprenant deux parties extrêmes (14, 15) qui sont fixées chacune à une extrémité du demi-tube, qui assurent la fixation de la structure semi-tubulaire et qui sont pourvues chacune de moyens d'ancrage (19, 21),
**caractérisé en ce que** chaque partie extrême (14, 15) présente deux pièces en forme de plaque (28, 29) entre lesquelles le demi-tube est inséré, les pièces en forme de plaque (28, 29) présentant une forme triangulaire ou trapézoïdale.

2. Dispositif selon la revendication 1, **caractérisé en ce que** la structure plane (16) est extensible au moins par portions.

3. Dispositif selon la revendication 1, **caractérisé en ce que** la structure plane (16) est formée par un filet.

4. Dispositif selon la revendication 3, **caractérisé en ce que** le filet (16) est composé de fils (25) élastomères ou inextensibles tressés.

5. Dispositif selon la revendication 3, **caractérisé en ce que** le filet (16) est composé d'un matériau extensible ou inextensible.

6. Dispositif selon la revendication 1, **caractérisé en ce que** la structure plane (16) est composée d'une feuille élastomère extensible.

7. Dispositif selon la revendication 1, **caractérisé en ce que** les bords longitudinaux (17, 18) se chevauchent ou sont jointifs.

8. Dispositif selon la revendication 1, **caractérisé en ce que** les bords longitudinaux (17, 18) présentent une plus grande force de rappel que le demi-tube par ailleurs.

9. Dispositif selon la revendication 1, **caractérisé en ce que** chaque bord longitudinal (17, 18) présente un élément linéaire élastomère (23, 24).

10. Dispositif selon la revendication 1, **caractérisé en ce que** les parties extrêmes (14, 15) sont cousues avec le demi-tube.

11. Dispositif selon la revendication 1, **caractérisé en ce que** les pièces en forme de plaque (28, 29) sont cousues ensemble.

12. Dispositif selon la revendication 1, **caractérisé en ce que** les pièces en forme de plaque (28, 29) sont composées d'un matériau souple.

13. Dispositif selon la revendication 1, **caractérisé en ce que** les moyens d'ancrage (19) sont des oeillets.

14. Dispositif selon la revendication 1, **caractérisé en ce que** les moyens d'ancrage (19) sont des crochets.
